# EUROPEAN PATENT SPECIFICATION

(11) **EP 2 499 825 B1**
(45) Date of publication and mention of the grant of the patent: **25.06.2014**
(21) Application number: 10830540.0
(22) Date of filing: 04.11.2010
(51) Int. Cl.: H04N 7/173

(54) **MOSAIC APPLICATION FOR GENERATING OUTPUT UTILIZING CONTENT FROM MULTIPLE TELEVISION RECEIVERS**
MOSAIKANWENDUNG ZUR ERZEUGUNG EINER AUSGABE UNTER VERWENDUNG VON INHALTEN AUS MEHREREN FERNSEHEMPFÄNGERN
APPLICATION MOSAÏQUE PERMETTANT DE GÉNÉRER UNE SORTIE UTILISANT UN CONTENU TRANSMIS PAR PLUSIEURS POSTES DE TÉLÉVISION

(30) Priority: 13.11.2009 US 618019
(43) Date of publication of application: 19.09.2012
(73) Proprietor: Echostar Technologies L.L.C., Englewood, CO 80112 (US)
(72) Inventor: MORZOS, Adam, C., Parker, Colorado 80134 (US)
(74) Representative: Reeve, Nicholas Edward
(86) International application number: PCT/US2010/055477
(87) International publication number: WO 2011/059874

(56) References cited:
- EP-A1- 1 225 763
- WO-A1-00/13416
- WO-A1-2008/002372
- WO-A2-00/13415
- KR-A- 20060 095 423
- KR-B1- 100 490 435
- US-A1- 2005 028 208
- US-A1- 2005 096 753
- US-A1- 2007 157 281
- US-A1- 2008 222 689

## Description

### FIELD OF THE INVENTION

This invention relates generally to television receivers, and more specifically to generating output utilizing content from multiple television receivers.

### BACKGROUND

Television receivers, such as set top boxes, typically receive programming content from one or more programming providers, perform some amount of processing upon that received programming content, and display the processed programming content on a display device such as a television. Each television receiver within a location (such as a home) may maintain one or more connections to the one or more programming providers (such as satellite connections, cable connections, and/or Internet connections) and/or multiple television receivers within a location may share such connections to obtain programming content. Some or all of the television receivers within a location may be interconnected via a local area network (such as a wired or wireless Ethernet network, a HomePlug network, and/or a coaxial cable network) and such interconnected television receivers may be operable to communicate with each other utilizing the local area network.

US 2007/0157281 discloses an interactive media guidance application implemented on a first user equipment device that may allow a user to create a group of user equipment devices. Interactive media guidance applications implemented on user equipment devices added to the group may allow users to select content to be stored. The content may be shared with the user equipment devices in the group.

### SUMMARY

The present disclosure provides systems, methods, techniques, instruction sequences, and/or computer program products that utilize a television receiver to generate a mosaic output utilizing content from multiple other television receivers connected via a local area network. A television receiver sends one or more requests for content to some or all of the other television receivers on a local area network. The television receiver receives content sent by the other television receivers and generates an output that includes the received content. The television receiver may then display the output on a display device. After displaying the output, the television receiver may receive an input from a user to alter the output and the television receiver may respond by altering the output as requested.

The television receiver may divide the output into a plurality of portions, each of which correspond to the content received from one of the other television receivers. The television receiver may also include programming content from one or more of its own tuners in the output. The television receiver may transcode the content before including it in the output.

In one or more implementations, when the other television receivers receive requests for content, they may determine whether the requests are allowed by a content control system such as a parental control system and/or a conditional access system. If the requests are riot allowed, alternative content may be sent in response to the requests such as a blank image or an image including an error message. The requests may include a request for detected content received by a detection device connected to the other television receiver, such as still images or video received by a camera or audio received by a microphone. The requests may also include a request for programming content such as currently displayed programming content, programming content from a tuner, and/or recorded programming content. If the request is for programming content from a tuner, the request may include a command to change the channel to which the tuner is set. The other television receiver may transcode the content prior to sending. The other television receiver may also convert the content to a still image (or a snapshot) prior to sending. If the television receiver receives content that has been converted to still images, the television receiver may periodically send out one or more new requests for content to request updated still images and update the output accordingly.

In various implementations, the output may be generated to present various interactive visual channel guides, monitor the television being watched using one or more set top boxes in a home, monitor security in a home, and/or other such applications.

The invention is defined by the appended claims.

It is to be understood that both the foregoing general description and the following detailed description are exemplary and explanatory only and do not necessarily limit the present disclosure. The accompanying drawings, which are incorporated in and constitute a part of the specification, illustrate subject matter of the disclosure. Together, the descriptions and the drawings serve to explain the principles of the disclosure.

### BRIEF DESCRIPTION OF THE DRAWINGS

Figure 1 is a block diagram illustrating a system for generating output utilizing content from multiple television receivers, in accordance with an embodiment of the present disclosure;
Figure 2 is a method diagram illustrating a method of which may be performed by the system of Figure 1;
Figure 3 is a sample output screen that may be generated by the system of Figure 1;
Figure 4 is a flow chart illustrating an example flow of the method of Figure 2; and
Figure 5 is a block diagram illustrating a system for generating output utilizing content from multiple television receivers, in accordance with an alternative embodiment of the present disclosure.

### DETAILED DESCRIPTION OF THE EMBODIMENTS

The description that follows includes exemplary systems, methods, techniques, instruction sequences, and/or computer program products that embody techniques of the present disclosure. However, it is understood that the described disclosure may be practiced without these specific details. Reference will now be made in detail to the subject matter disclosed, which is illustrated in the accompanying drawings.

The present disclosure provides systems and methods for generating output utilizing content from multiple television receivers. A television receiver is connected to multiple other television receivers over a local area network. The television receiver sends requests for content to at least some of the multiple other television receivers and receives content in response to the requests. The television receiver then generates output that includes the received content and may display the output on an attached display device.

For example, a user may have television receivers in his bedroom, living room, basement, and child's bedroom. Each of the television receivers may be networked to each other via a local area network. Each of the television receivers may be connected to a separate television.device. The user may be in his bedroom and wish to know what is being watched on the televisions in his living room, basement, and child's bedroom. As such, the user may utilize a remote control for the television receiver in his bedroom to invoke a mosaic application. When the mosaic application is invoked, the bedroom television receiver may send out requests for content via the local area network to the living room television receiver, the basement television receiver, and the child's bedroom television receiver. The requests for content may request a still image of the programming content each television receiver is currently displaying on the respective television connected to that television receiver. In response to the request for content, each television receiver generates a still image (e.g.,take a snapshot) of the programming content that television receiver is currently displaying on its respective connected television and sends that still image via the local area network to the bedroom television receiver. Upon receipt of the still images from the living room television receiver, the basement television receiver, and the child's bedroom television receiver, the bedroom television receiver generates a composite image, or mosaic, including all of the received images. The bedroom television receiver may then display the composite image on its respective connected television. Periodically, the bedroom television receiver may send out new requests for content to request updated still images of the programming content each television receiver is currently displaying and update the composite image using the updated still images. In this way, the user can simultaneously visually inspect what is being watched on each of the televisions in his home.

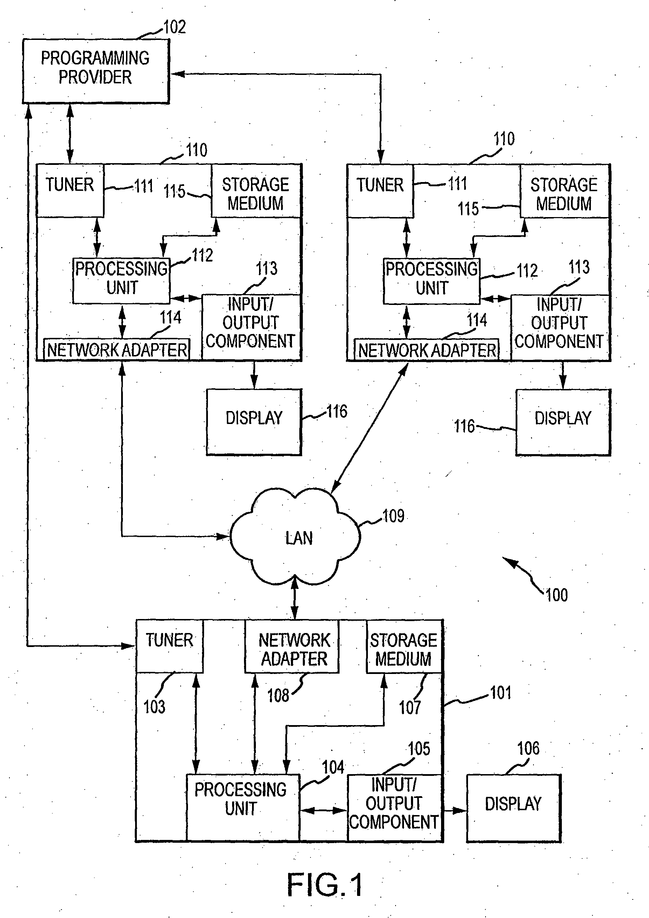

FIG. 1 is a block diagram illustrating a system 100 for generating output utilizing content from multiple television receivers, in accordance with an embodiment of the present disclosure. The system 100 includes a television receiver 101, one or more programming providers 102 (such as satellite programming provides, cable television programming providers, and Internet programming providers), and television receivers 110. The television receiver 101 includes one or more processing units 104, a storage medium 107 (which may be any machine-readable storage medium), one or more tuners 103, a network adapter 108 and input/output component 105. The television receiver 101 may implement software by utilizing the one or more processing units 104 to execute software instructions stored in the storage medium 107. The television receiver 101 is operable to receive programming content from the one or more programming providers 102 via the one or more tuners 103, process the received programming content utilizing the one or more processing units 104 (such as demodulating, demultiplexing and/or decoding the received programming content), and display the programming content on a display device 106 via the input/output component 105. The television receiver 101 may receive input from a user via the input/output component 105 (such as from a remote control) and may provide output to the user on the display device 106 via the input/output component 105. The television receiver 101 may also be operable to store programming content in the storage medium 107 and display programming content stored in the storage medium 107 on the display device 106 via the input/output component 105.

The television receiver 101 is operable to communicate with the television receivers 110 via a local area network 109 via the network adapter 108. The television receiver 101 and/or television receivers 110 may be set top boxes. Set top boxes are devices located on or near a display device that are operable to process signals received from one or more programming providers to produce signals in a format for display on the display device. Although as illustrated the television receiver 101 as operable to communicate with two television receivers 110 via the local area network 109, it is understood that the television receiver 101 may be operable to communicate with any number of television receivers 110 that are communicably coupled to the local area network 109. In addition to the television receiver 101 and the television receivers 110, the local area network 109 may be used to interconnect a number of network nodes including, for example, gaming consoles, multimedia centers, and/or general purpose computers. The local area network 109 may be any kind of local area network that utilizes any kind of interconnection medium such as a wired Ethernet network, a wireless Ethernet network, a HomePlug network, a coaxial cable network, and/or a MoCA (Multimedia Over Coax Alliance) network.

Each of the television receivers 110 include one or more processing units 112, a storage medium 115, one or more tuners 111, a network adapter 114 and input/output component 113. Each television receiver 110 is operable to receive programming content from the one or more programming providers 102 via the one or more tuners 111, process the received programming content utilizing the one or more processing units 112, and display the programming content on a display device 116 via the input/output component 113. Each television receiver 110 may receive input from a user via the input/output component 113 and may provide output to the user on the display device 116 via the input/output component 113. Each television receiver 110 may also be operable to store programming content in the storage medium 107 and display programming content stored in the storage medium 107 on the display device 106 via the input/output component 105.

The television receiver 101 and each of the television receivers 110 may include one or more detection devices (not shown) that are operable to receive detection content. For example, the detection device may be a still and/or video camera and the detection content may be video or still images captured by the camera. By way of another example, the detection device may be a microphone and the detection content may be audio captured by the microphone.

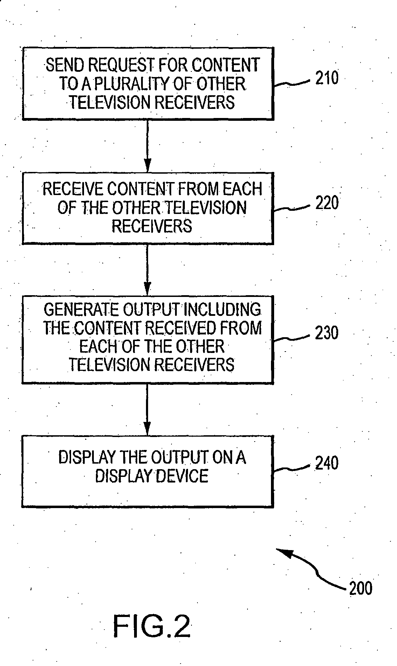

FIG. 2 is a method diagram illustrating a method 200 of which may be performed by the television receiver 101. The television receiver 101 may perform the method 200 by the processing unit 104 loading and executing one or more instructions embodied in a computer-readable and/or machine-readable medium, such as the storage medium 105 and/or another storage medium.

In operation 210, the television receiver 101 sends one or more requests for content to a plurality of other television receivers 110 via the local area network 109. The television receiver 101 may send the same request to all of some of the television receivers 110 connected via the local area network 109. The television receiver 101 may send different requests to one or more of the television receivers 110 connected via the local area network 109.

The one or more requests may include information about the television receiver 101, such as a parental control setting of the television receiver 101 or various conditional access system identifiers or keys of the television receiver 101. When the plurality of other television receivers 110 receive the one or more requests for content, the plurality of other television receivers 110 may determine whether the one or more requests for content are allowed by a content control system such as a parental control system and/or a conditional access system. The plurality of other television receivers 110 may determine whether the one or more requests for content are allowed by the content control system based on the information included in the one or more requests. For example, one or more of the plurality of other television receivers 110 may be set to refuse all requests for content. By way of another example, the one or more requests for content may include a request for programming content that is not authorized to be accessed by the television receiver 101. By way of still another example, the one or more requests for content may include a request for programming content that exceeds a parental control setting of the television receiver 101. If the one or more requests are not allowed, the one or more of the plurality of other television receivers may send alternative content in response to the one or more requests. For example, the alternative content may be a blank image. By way of another example, the alternative content may be an image including an error message corresponding to why the one or more requests are not allowed.

The one or more requests may include a request for programming content. The request for programming content may include a request for the programming content the one or more of the plurality of other television receivers 110 is currently displaying. The request for programming content may also include a request to obtain programming content via a tuner of the one or more of the plurality of other television receivers 110 and/or a request for programming content recorded in the storage medium 115 of the one or more of the plurality of other television receivers 110. If the request for programming content includes a request to obtain programming content via a tuner of the one or more of the plurality of other television receivers 110, the request may include a command to change the channel to which the tuner is set. If the request includes a command to change the channel to which the tuner is set, the one or more of the plurality of other television receivers 110 may change the tuner's channel based on the command.

The one or more of the plurality of other television receivers 110 may then send the requested content and/or alternative content to the television receiver 101. The one or more of the plurality of other television receivers 110 may transcode the content prior to sending the content to the television receiver 101. The one or more of the plurality of other television receivers 110 may determine whether to transcode the content prior to sending based on information included in the one or more requests for content. The one or more of the plurality of other television receivers 110 may also convert the content to a still image (or a snapshot) prior to sending the content to the television receiver 101. The one or more of the plurality of other television receivers 110 may determine whether to convert the content to a still image prior to sending based on information included in the one or more requests for content.

In operation 220, the television receiver 101 receives content from each of the plurality of other television receivers via the local area network 109.

In operation 230, the television receiver 101 generates an output that includes the content received from each of the other television receivers. The television receiver 101 may divide the output into a plurality of portions, each of which correspond to the content received from one of the plurality of other television receivers 110. The television receiver 101 may also include programming content from one or more of its own tuners in the output. The television receiver 101 may transcode the content received from one or more of the other television receivers and/or the programming content from one or more of its own tuners before including it in the output.

The method 200 may include operation 240. In operation 240, the television receiver 101 may display the output on a display device. The display device may be the display device 106.

After displaying the output, the television receiver 101 may receive an input from a user to alter the output. In response to receiving such a user input, the television receiver 101 may alter the output as requested and display the altered output.

If the received content used to generate the output includes content converted to still images, the television receiver 101 may periodically send out one or more new requests for content to request updated still images from the plurality of other television receivers 110 and update the output using the updated still images.

By way of example of method 200, a user may invoke a mosaic application on a television receiver to display a screen including live video of a first channel of programming content from a tuner of the television receiver along with still images of programming content of five particular different channels of programming content from tuners of five other television receivers connected to the television receiver via a local area network. In this example, the television receiver sends out requests to each of the five other television receivers to switch their tuner to one of the particular channels and provide a snapshot of the programming content on that channel. The television receiver then receives the five snapshots, generates a mosaic of the first live channel and five snapshots, and displays the mosaic on a display device. Periodically, the television receiver may send out new requests for content to request updated still images of the programming content of the particular respective channel of programming content from the tuner of each of the five other television receivers and update the mosaic using the updated still images.

After the mosaic is displayed, the user may then be able to select one of the five snapshots using a remote control for the television receiver. If the user selects one of the five snapshots, the television receiver may switch its tuner to obtain live video of the particular channel corresponding to the snapshot. The television receiver may also send a new request to the other television receiver that sent that snapshot to change its tuner to the first channel and provide a snapshot of that channel. The television receiver then updates the mosaic with the newly live channel and the snapshot of the first channel.

By way of another example of method 200, a user may invoke a mosaic application on a television receiver to monitor the security of their home. In this example, the mosaic application may be set to display a screen including live video from video cameras connected to four of five other television receivers connected to the television receiver via a local area network in the user's home. The television receiver sends out a request to the four other television receivers to provide the video detected by their respective video cameras. The television receiver then receives the four different video feeds, generates a mosaic of the four different video feeds, and displays the mosaic on a display device.

By way of yet another example of method 200, a user may invoke a mosaic application on a television receiver to see what programming content is currently being watched using other television receivers in their home. In this example, the mosaic application may be set to display a screen including the programming content that is currently being displayed by the eight other television receivers connected to the television receiver via a local area network in the user's home. The television receiver sends out a request to the eight other television receivers to provide their currently displayed programming content. The television receiver then receives the eight different video feeds, generates a mosaic of the eight different video feeds, and displays the mosaic on a display device. The user may then be able to select one of the eight video feeds using a remote control for the television receiver. If the user selects one of the eight video feeds, the television receiver may switch its tuner to obtain the programming content of the channel corresponding to the selected video feed. The television receiver may then close the mosaic application and display the programming content by itself on the display device.

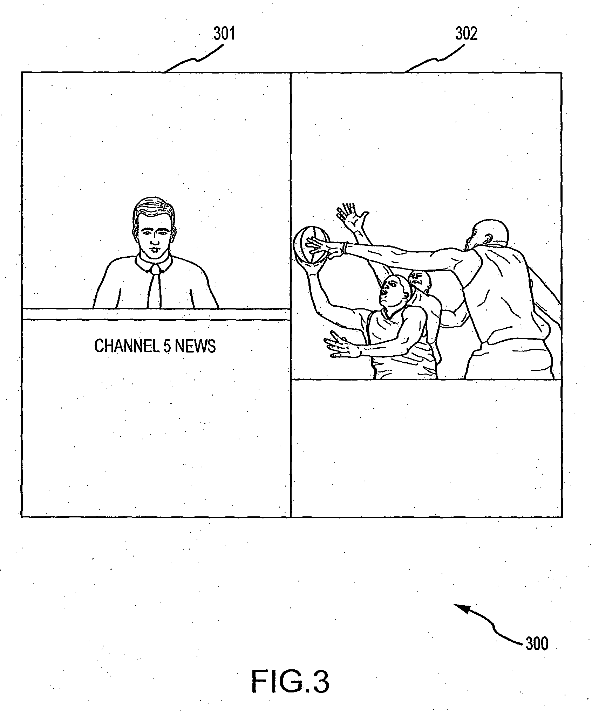

FIG. 3 is a sample output screen 300 that may be generated by the television receiver 101 performing an example of the method 200. In this example, one of the television receivers 110 is currently displaying programming content corresponding to a news program and one of the television receivers is displaying programming content corresponding to a basketball game. The television receiver 101 sends requests for content to the two television receivers 110 over the local area network 109 requesting the programming content they are currently displaying. The television receivers 110 each respond by sending the currently displayed programming content. The television receiver 101 receives the currently displayed programming content from each of the television receivers 110 and generates an output including the received programming content. In this example, the television receiver 101 generates an output screen 300 that is divided into two portions 301 and 302 that each correspond to the programming content received from one of the television receivers 110. As illustrated, portion 301 corresponds to the programming content received from the television receiver 110 that is currently displaying the news program and portion 302 corresponds to the programming content received from the television receiver 110 that is currently displaying the basketball game.

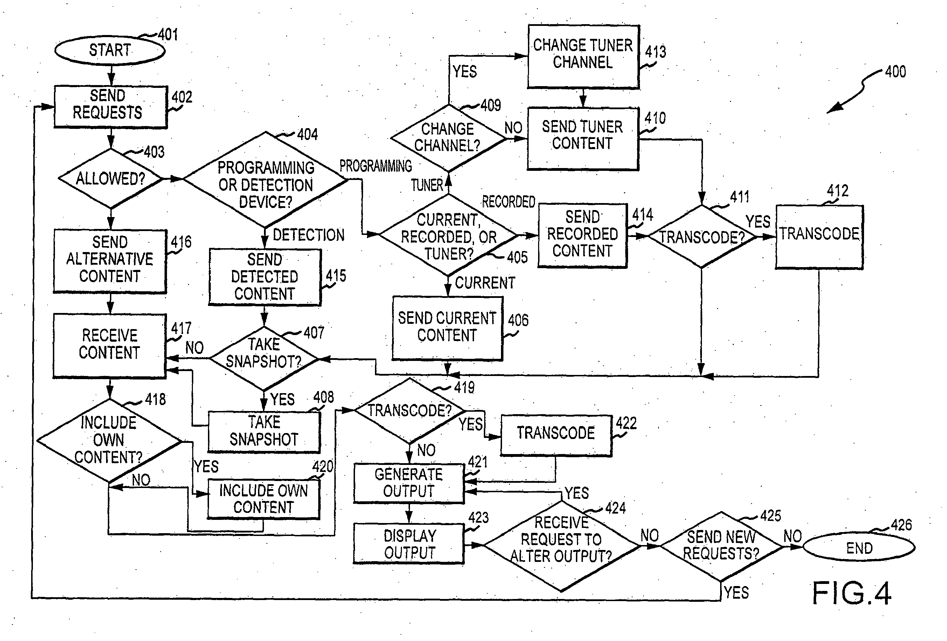

FIG. 4 illustrates a sample flow 400 of the television receiver 101 performing the method 200. The flow starts at block 401 and proceeds to block 402. At block 402, the television receiver 101 sends out one or more requests for content to one or more television receivers 110 via the local area network 109 and the flow proceeds to block 403.

At block 403, the one or more requests for content are evaluated to determine whether the one or more requests for content are allowed by a content control system such as a parental control system and/or a conditional access system. The one or more television receivers 110 may evaluate whether the one or more requests for content are allowed by the content control system. If the one or more requests for content are allowed, flow proceeds to block 404. If the one or more requests for content are not allowed, flow proceeds to block 416.

At block 416, alternative content is sent from the one or more television receivers 110 in response to the one or more requests for content. The alternative content may be a blank image. Alternatively, the alternative content may be an image including an error message indicating why the one or more requests for content is not allowed, such as a message that the requested content is blocked by a parental control system or conditional access system.

At block 404, the one or more requests for content are evaluated to determine whether the one or more requests for content includes a request for programming content or a request for detection content from a detection device such as a camera or microphone. The one or more television receivers 110 may evaluate whether the one or more requests for content includes a request for programming content or a request for detection content from a detection device. If the one or more requests for content includes a request for programming content, flow proceeds to block 405. If the one or more requests includes a request for detection content from a detection device, flow proceeds to block 415. At block 415, the one or more television receivers 110 prepare to send detection content from a detection device and flow proceeds to block 407.

At block 405, the request for programming is evaluated to determine whether the request for programming includes a request for current content, a request for recorded content, or a request for programming content from a tuner of the one or more television receivers 110. The one or more television receivers 110 may evaluate whether the request for programming includes a request for current content, a request for recorded content, or a request for programming content from a tuner. If the request for programming includes a request for current content, flow proceeds to block 406. If the requests for programming includes a request for recorded content, flow proceeds to block 414. If the request for programming includes a request for programming content from a tuner, flow proceeds to block 409. At block 406, the one or more television receivers 110 prepare to send current content and flow proceeds to block 407.

At block 414, the one or more television receivers 110 prepare to send recorded content that is stored in a storage medium of the one or more television receivers 110 and flow proceeds to block 411. At block 411, the one or more television receivers 110 determine whether to transcode the content before sending. If the one or more television receivers 110 determine to transcode the content before sending, flow proceeds to block 412. If the one or more television receivers 110 determine not to transcode the content before sending, flow proceeds to block 407. At block 412, the one or more television receivers 110 transcode the content and flow proceeds to block 407.

At block 409, the request for programming content from a tuner is evaluated to determine whether the request includes a command to change the channel to which the tuner is tuned. The one or more television receivers 110 may evaluate whether the request for programming content from a tuner to determine whether the request includes a command to change the channel to which the tuner is tuned. If the request includes a command to change the channel, flow proceeds to block 413. If the request does not include a command to change the channel, flow proceeds to block 410. At block 410, the one or more television receivers 110 prepare to send programming content from a tuner and flow proceeds to block 411. At block 413, the one or more television receivers 110 change the channel to which the tuner is set and flow proceeds to block 410.

At block 407, the one or more television receivers 110 determine whether to send the full content or a snapshot (e.g., still image) of the content. The one or more television receivers 110 may determine whether to send the full content or a snapshot based on what is specified in the one or more requests for content. If the or more television receivers 110 determine to send the full content, the content is sent and flow proceeds to block 417. If the or more television receivers 110 determine to send a snapshot of the content, flow proceeds to block 408. At block 408, the one or more television receivers 110 generates a snapshot from the content. The snapshot is then sent and flow proceeds to block 417.

At block 417, the television receiver 101 receives the content from the one or more television receivers 110 via the local area network 109. Flow then proceeds to block 418. At block 418, the television receiver 101 determines whether to include content from one or more of its own tuners. If the television receiver 101 determines to include content from one or more of its own tuners, flow proceeds to block 420. If the television receiver 101 determines not to include content from one or more of its own tuners, flow proceeds to block 419. At block 420, the television receiver 101 selects content from one or more of its own tuners to include and flow proceeds to block 419.

Although flow 400 is illustrated as having a single flow of blocks 403 through 416, it is understood that each of the one or more television receivers 110 may perform a separate flow of blocks 403 through 416.

At block 419, the television receiver 101 determines whether to transcode any of the content. If the television receiver 101 determines to transcode any of the content, flow proceeds to block 422. If the television receiver 101 determines not to transcode any of the content, flow proceeds to block 421. At block 422, the television receiver 101 transcodes some or all of the content Flow then proceeds to block 421.

At block 421, the television receiver 101 generates an output including the content received from the one or more television receivers 110. The output may also include content from one or more tuners of the television receiver 101. Flow then proceeds to block 423 where the television receiver 101 displays the output on display device 106.

Flow then proceeds to block 424. At block 424, the television receiver 101 determines whether it receives a user input requesting to alter the output. If the television receiver 101 receives a user input requesting to alter the output, flow proceeds to block 421 and the television receiver 101 alters the output. If the television receiver 101 does not receive a user input requesting to alter the output, flow proceeds to block 425.

At block 424, the television receiver 101 determines whether to send one or more new requests for content to one or more television receivers 110. For example, if the received content used to generate the output includes content converted to still images, the television receiver 101 may send out new requests for content to request updated still images and update the output using the updated still images. If the television receiver 101 determines to send one or more new requests for content, flow proceeds to block 402. If the television receiver 101 determines not to send one or more new requests for content, flow proceeds to block 426 and ends.

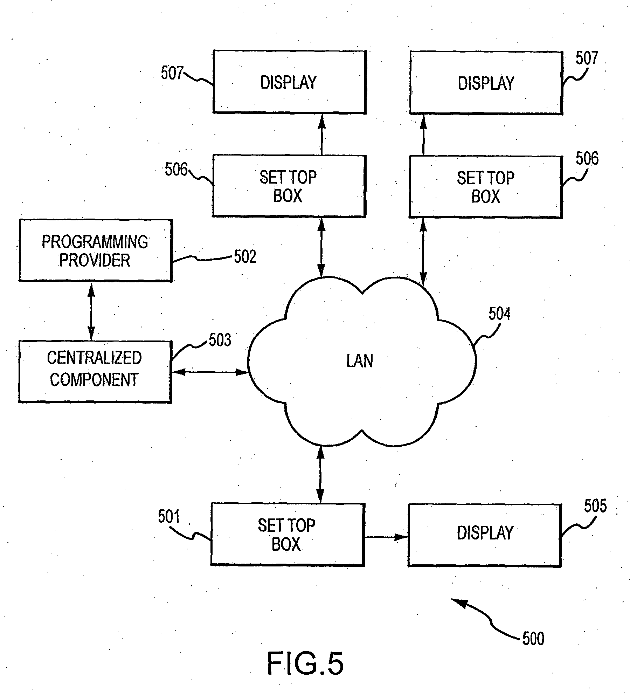

FIG. 5 is a block diagram illustrating a system 500 for generating output utilizing content from multiple television receivers, in accordance with an alternative embodiment of the present disclosure. The system 500 includes a set top box 501, one or more programming providers 502, a centralized component 503, a local area network 505, and set top boxes 506. The set top box 501, centralized component 503, and set top boxes 506 may include one or more processing units, storage media, tuners, network adapters and input/output components (not shown).

The centralized component 503 is operable to receive programming content from the one or more programming providers 502, process the received programming content (such as tuning, demodulating, demultiplexing and/or decoding the received programming content), and provide the processed programming content to the set top box 501 and the set top boxes 506 via the local area network 504. The set top box 501 and the set top boxes 506 may be operable to receive the processed programming content from the centralized component 503 via the local area network 503, perform additional processing on the received programming content (such as demodulating, demultiplexing and/or decoding the received programming content), and display the additionally processed programming content on display devices 505 or 506. Thus, set top box 501 and the set top boxes 506 do not need individual connections to the one or more programming providers 502 as communications with the one or more programming providers 502 are handled by the centralized component 503 and the set top box 501 and the set top boxes 506 then communicate with the centralized component 503 via the local area network 504. Further, as the centralized component 503 performs at least some processing of the programming content before providing it to the set top box 501 and the set top boxes 506, set top box 501 and the set top boxes 506 are not required to fully process the received programming content before displaying it on display devices 505 or 506.

The set top box 501 is operable to communicate with the set top boxes 506 via the local area network 504. The set top box 501 may communicate with the set top boxes 506 via the local area network 504 to perform various implementations of method 200.

In the present disclosure, the methods disclosed may be implemented as sets of instructions or software readable by a device. Further, it is understood that the specific order or hierarchy of steps in the methods disclosed are examples of exemplary approaches. Based upon design preferences, it is understood that the specific order or hierarchy of steps in the method can be rearranged while remaining within the disclosed subject matter. The accompanying method claims present elements of the various steps in a sample order, and are not necessarily meant to be limited to the specific order or hierarchy presented.

The described disclosure may be provided as a computer program product, or software, that may include a machine-readable medium having stored thereon instructions, which may be used to program a computer system (or other electronic devices) to perform a process according to the present disclosure. A machine-readable medium includes any mechanism for storing information in a form (e.g., software, processing application) readable by a machine (e.g., a computer). The machine-readable medium may include, but is not limited to, magnetic storage medium (e.g., floppy diskette), optical storage medium (e.g., CD-ROM); magneto-optical storage medium, read only memory (ROM); random access memory (RAM); erasable programmable memory (e.g., EPROM and EEPROM); flash memory; or other types of medium suitable for storing electronic instructions.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes.

While the present disclosure has been described with reference to various embodiments, it will be understood that these embodiments are illustrative and that the scope of the disclosure is not limited to them. Many variations, modifications, additions, and improvements are possible. More generally, embodiments in accordance with the present disclosure have been described in the context or particular embodiments. Functionality may be separated or combined in blocks differently in various embodiments of the disclosure or described with different terminology. These and other variations, modifications, additions, and improvements may fall within the scope of the disclosure as defined in the claims that follow.

## Claims

1. A method (200) for generating an output of a first television receiver, comprising:
sending at least one request for image content, utilizing said first television receiver (101), to each television receiver of a plurality of other television receivers (110) via a local area network (109);
receiving said image content at the first television receiver from each television receiver of the plurality of other television receivers via the local area network; ,
generating said output (300), utilizing the first television receiver, said output including the image content received from each television receiver of the plurality of other television receivers, said output being divided into at least a plurality of portions (301, 302) and each of the plurality of portions corresponding to the image content received from each of the plurality of other television receivers;
receiving, at the first television receiver, user input identifying a selected portion of the plurality of portions; and
switching a tuner of the first television receiver to receive programming content corresponding to the selected portion of the plurality of portions.

2. The method of claim 1, further comprising displaying said output (300), utilizing the first television receiver (101), on a display device (106).

3. The method of claim 1 or 2, wherein the image content received from at least one television receiver of the plurality of other television receivers (110) is
programming content said one television receiver is outputting to a display device; or a still image generated from programming content said one television receiver is outputting to a display device; and may further comprise the steps of requesting and receiving one of
recorded content stored in a storage device connected to said one television receiver; and
detected content received by a detection device connected to said one television receiver.

4. The method of any preceding claim, further comprising:
receiving at least one input at the first television receiver (101) to alter at least one aspect of said output; and
altering the at least one aspect of said output, utilizing the first television receiver, based on the at least one input.

5. The method of any preceding claim, wherein the at least one request for image content includes at least one instruction to change a channel received by a tuner (111) of at least one of the plurality of other television receivers (110).

6. The method of any preceding claim, wherein the image content received from at least one of the plurality of other television receivers (110) is alternative content, other than content specified by the at least one request for image content when the at least one request for image content was not allowed by a content control system.

7. The method of any preceding claim, further comprising transcoding, utilizing the first television receiver (101), the image content received from at least one of the plurality of other television receivers (110).

8. The method of any preceding claim, wherein the image content received from at least one of the plurality of other television receivers (110) has been transcoded by the respective television receiver.

9. The method of any preceding claim, wherein said output (300) includes programming content received by a tuner (103) of the first television receiver (101).

10. A system (100) for generating an output of a first television receiver, comprising:
a first television receiver (101) adapted to generate said output; and
a plurality of other television receivers (110), communicably coupled to the first television receiver via a local area network (109); wherein the first television receiver sends at least one request for image content to each television receiver of the plurality of other television receivers, receives said image content from each of the plurality of other television receivers, and generates said output (300) including the image content received from each of the plurality of other television receivers, said output being divided into at least a plurality of portions (301, 302) and each of the plurality of portions corresponding to the image content received from each of the plurality of other television receivers;
wherein when the first television receiver receives user input identifying a selected one of the plurality of portions, a tuner of the first television receiver is switched to receive programming content corresponding to the selected portion of the plurality of portions.

11. The system of claim 10, wherein the image content received from at least one of the plurality of other television receivers (110) comprises programming content said one television receiver is outputting to a display device.

12. The system of claim 10, further comprising at least one detecting device communicably coupled to at least one television receiver of the plurality of other television receivers (110), wherein the content received from said television receiver of the plurality of other television receivers comprises detected content received by said detection device.

13. The system of claim 10, 11 or 12, wherein the detecting device comprises at least a camera or a microphone.

14. A television receiver (101), comprising: at least one processing unit (104) adapted to generate at least one output; a tuner; and
at least one network communication component (108), communicably coupled to the at least one processing unit, adapted to send at least one request for image content to each television receiver of a plurality of other television receivers (110) and to receive image content from each of the plurality of other television receivers via a local area network (109);
wherein said processing unit generates said output including the content received from each of the plurality of other television receivers, such that said output (300) is divided into at least a plurality of portions (301, 302) and each of the plurality of portions is corresponding to the image content received from each of the plurality of other television receivers;
wherein when the processing unit receives user input identifying a selected one of the plurality of portions, said tuner (103) of the television receiver is switched to receive programming content corresponding to the selected portion of the plurality of portions.

15. The television receiver of claim 14, further comprising: at least one user interface component adapted to receive at least one input to alter at least one aspect of the output, wherein said processing unit (104) alters said aspect of the output in response to said input.

## Patentansprüche

1. Verfahren (200) zum Erzeugen eines Ausgangs eines ersten Fernsehempfängers, das Folgendes beinhaltet:
Senden von wenigstens einer Bildinhaltsanforderung unter Verwendung des genannten ersten Fernsehempfängers (100) zu jedem Fernsehempfänger aus einer Mehrzahl von anderen Fernsehempfängern (110) über ein lokales Netzwerk (109);
Empfangen des genannten Bildinhalts an dem ersten Fernsehempfänger von jedem Fernsehempfänger aus der Mehrzahl von anderen Fernsehempfängern über das lokale Netzwerk;
Erzeugen des genannten Ausgangs (300), unter Verwendung des ersten Fernsehempfängers, wobei der genannte Ausgang den von jedem Fernsehempfänger aus der Mehrzahl von anderen Fernsehempfängern empfangenen Bildinhalt beinhaltet, wobei der genannte Ausgang in wenigstens eine Mehrzahl von Teilen (301, 302) unterteilt wird und jeder aus der Mehrzahl von Teilen dem von jedem aus der Mehrzahl von anderen Fernsehempfängern empfangenen Bildinhalt entspricht;
Empfangen, an dem ersten Fernsehempfänger, von Benutzereingaben, die einen gewählten Teil aus der Mehrzahl von Teilen identifizieren; und
Schalten eines Tuners des ersten Fernsehempfängers auf Empfangen des dem gewählten Abschnitt aus der Mehrzahl von Teilen entsprechenden Programmierinhalts.

2. Verfahren nach Anspruch 1, das ferner das Anzeigen des genannten Ausgangs (300), unter Verwendung des ersten Fernsehempfängers (101), auf einem Anzeigegerät (106) beinhaltet.

3. Verfahren nach Anspruch 1 oder 2, wobei der von wenigstens einem Fernsehempfänger aus der Mehrzahl von anderen Fernsehempfängern (110) empfangene Bildinhalt Folgendes ist:
Programmierinhalt, den der genannte eine Fernsehempfängers an ein Anzeigegerät ausgibt; oder
ein Festbild, erzeugt von Programmierinhalt, den der genannte eine Fernsehempfänger an ein Anzeigegerät ausgibt;
und kann ferner die Schritte des Anforderns und Empfangenes eines der Folgenden beinhalten:
aufgezeichneten Inhalt, der in einem mit dem genannten einen Fernsehempfänger verbundenen Speichergerät gespeichert ist; und
erkannten Inhalt, der von einem mit dem genannten einen Fernsehempfänger verbundenen Detektionsgerät empfangen wird.

4. Verfahren nach einem vorherigen Anspruch, das ferner Folgendes beinhaltet:
Empfangen von wenigstens einem Eingang am ersten Fernsehempfänger (101) zum Verändern von wenigstens einem Aspekt des genannten Ausgangs; und
Verändern des wenigstens einen Aspekts des genannten Ausgangs unter Verwendung des ersten Fernsehempfängers auf der Basis des wenigstens einen Eingangs.

5. Verfahren nach einem vorherigen Anspruch, wobei die wenigstens eine Bildinhaltsanforderung wenigstens einen Befehl zum Wechseln eines Kanals beinhaltet, der von einem Tuner (111) von wenigstens einem aus der Mehrzahl von anderen Fernsehempfängern (110) empfangen wird.

6. Verfahren nach einem vorherigen Anspruch, wobei der von wenigstens einem aus der Mehrzahl von anderen Fernsehempfängern (110) empfangene Bildinhalt alternativer Inhalt und nicht der Inhalt ist, der von der wenigstens einen Bildinhaltsanforderung verlangt wurde, wenn die wenigstens eine Bildinhaltsanforderung von einem Inhaltssteuersystem nicht zugelassen wurde.

7. Verfahren nach einem vorherigen Anspruch, das ferner das Transcodieren, unter Verwendung des ersten Fernsehempfängers (101), des von wenigstens einem aus der Mehrzahl von anderen Fernsehempfängern (110) empfangenen Bildinhalts beinhaltet.

8. Verfahren nach einem vorherigen Anspruch, wobei der von wenigstens einem aus der Mehrzahl von anderen Fernsehempfängern (110) empfangene Bildinhalt von dem jeweiligen Fernsehempfänger transcodiert wurde.

9. Verfahren nach einem vorherigen Anspruch, wobei der genannte Ausgang (300) von einem Tuner (103) des ersten Fernsehempfängers (101) empfangenen Programmierinhalt beinhaltet.

10. System (100) zum Erzeugen eines Ausgangs eines ersten Fernsehempfängers, das Folgendes umfasst:
einen ersten Fernsehempfänger (101) zum Erzeugen des genannten Ausgangs; und
eine Mehrzahl von anderen Fernsehempfängern (110), die kommunizierbar mit dem ersten Fernsehempfänger über ein lokales Netzwerk (109) gekoppelt sind; wobei der erste Fernsehempfänger wenigstens eine Bildinhaltsanforderung zu jedem Fernsehempfänger aus der Mehrzahl von anderen Fernsehempfängern sendet, den genannten Bildinhalt von jedem aus der Mehrzahl von anderen Fernsehempfängern empfängt und den genannten Ausgang (300) einschließlich des von jedem aus der Mehrzahl von anderen Fernsehempfängern empfangenen Bildinhalts erzeugt, wobei der genannte Ausgang in wenigstens eine Mehrzahl von Teilen (301, 302) unterteilt wird und jeder aus der Mehrzahl von Teilen dem von jedem aus der Mehrzahl von anderen Fernsehempfängern empfangenen Bildinhalt entspricht;
wobei, wenn der erste Fernsehempfänger Benutzereingaben empfängt, die einen ausgewählten einen aus der Mehrzahl von Teilen identifizieren, ein Tuner des ersten Fernsehempfängers so geschaltet wird, dass er Programmierinhalt empfängt, der dem gewählten Teil aus der Mehrzahl von Teilen entspricht.

11. System nach Anspruch 10, wobei der von wenigstens einem aus der Mehrzahl von anderen Fernsehempfängern (110) empfangene Bildinhalt Programmierinhalt beinhaltet, den der genannte eine Fernsehempfänger an ein Anzeigegerät ausgibt.

12. System nach Anspruch 10, das ferner wenigstens ein Detektionsgerät umfasst, das kommunizierbar mit wenigstens einem Fernsehempfänger aus der Mehrzahl von anderen Fernsehempfängern (110) gekoppelt ist, wobei der von dem genannten Fernsehempfänger aus der Mehrzahl von anderen Fernsehempfängern empfangene Inhalt detektierten Inhalt umfasst, der von dem genannten Detektionsgerät empfangen wurde.

13. System nach Anspruch 10, 11 oder 12, wobei das Detektionsgerät eine Kamera und/oder ein Mikrofon umfasst.

14. Fernsehempfänger (101), der Folgendes umfasst:
wenigstens eine Verarbeitungseinheit (104) zum Erzeugen von wenigstens einem Ausgang; einen Tuner; und
wenigstens eine Netzkommunikationskomponente (108), die kommunizierbar mit der wenigstens einen Verarbeitungseinheit gekoppelt ist, zum Senden von wenigstens einer Bildinhaltsanforderung zu jedem Fernsehempfänger aus einer Mehrzahl von anderen Fernsehempfängern (110) und zum Empfangen von Bildinhalt von jedem aus der Mehrzahl von anderen Fernsehempfängern über ein lokales Netzwerk (109);
wobei die genannte Verarbeitungseinheit den genannten Ausgang erzeugt, der den von jedem aus der Mehrzahl von anderen Fernsehempfängern empfangenen Inhalt beinhaltet, so dass der genannte Ausgang (300) in wenigstens eine Mehrzahl von Teilen (301, 302) unterteilt wird und jeder aus der Mehrzahl von Teilen dem von jedem aus der Mehrzahl von anderen Fernsehempfängern empfangenen Bildinhalt entspricht;
wobei, wenn die Verarbeitungseinheit Benutzereingaben empfängt, die einen gewählten aus der Mehrzahl von Teilen identifizieren, der genannte Tuner (109) des Fernsehempfängers so geschaltet wird, dass er Programmierinhalt empfängt, der dem gewählten Teil aus der Mehrzahl von Teilen entspricht.

15. Fernsehempfänger nach Anspruch 14, der ferner Folgendes umfasst: wenigstens eine Benutzeroberflächenkomponente zum Empfangen von wenigstens einer Eingabe zum Ändern von wenigstens einem Aspekt des Ausgangs, wobei die genannte Verarbeitungseinheit (104) den genannten Aspekt des Ausgangs als Reaktion auf die genannte Eingabe verändert.

## Revendications

1. Procédé (200) destiné à générer une sortie d'un premier récepteur de télévision, comprenant :
envoyer au moins une demande de contenu d'image, en utilisant ledit premier récepteur de télévision (101), à chaque récepteur de télévision d'une pluralité d'autres récepteurs de télévision (110) par un réseau local (109);
recevoir ledit contenu d'image au premier récepteur de télévision de chaque récepteur de télévision de la pluralité d'autres récepteurs de télévision par le réseau local;
générer ladite sortie (300), en utilisant le premier récepteur de télévision, ladite sortie comprenant le contenu d'image reçu de chaque récepteur de télévision de la pluralité d'autres récepteurs de télévision, ladite sortie étant divisée en au moins une pluralité de parties (301, 302) et chacune de la pluralité de parties correspondant au contenu d'image reçu de chacun de la pluralité d'autres récepteurs de télévision;
recevoir, au premier récepteur de télévision, une entrée utilisateur identifiant une partie sélectionnée de la pluralité de parties; et
régler un syntoniseur du premier récepteur de télévision pour recevoir le contenu de programmation correspondant à la partie sélectionnée de la pluralité de parties.

2. Procédé selon la revendication 1, comprenant en outre afficher ladite sortie (300) sur un dispositif d'affichage (106) en utilisant le premier récepteur de télévision (101).

3. Procédé selon la revendication 1 ou 2, dans lequel le contenu d'image reçu d'au moins un récepteur de télévision de la pluralité d'autres récepteurs de télévision (110), est
un contenu de programmation que ledit un récepteur de télévision sort à un dispositif d'affichage; ou
une image fixe générée à partir du contenu de programmation que ledit un récepteur de télévision sort à un dispositif d'affichage;
et peut comprendre en outre les étapes consistant à demander et à recevoir l'un d'entre
un contenu enregistré stocké dans un dispositif de stockage connecté audit un récepteur de télévision; et
un contenu détecté reçu par un dispositif de détection connecté audit un récepteur de télévision.

4. Procédé selon l'une quelconque des revendications précédentes, comprenant en outre :
recevoir au moins une entrée au premier récepteur de télévision (101) pour modifier au moins un aspect de ladite sortie; et
modifier le au moins un aspect de ladite sortie, en utilisant le premier récepteur de télévision, sur la base de la au moins une entrée.

5. Procédé selon l'une quelconque des revendications précédentes, dans lequel la au moins une demande de contenu d'image comprend au moins une instruction de changer une chaîne reçue par un syntoniseur (111) d'au moins un de la pluralité d'autres récepteurs de télévision (110).

6. Procédé selon l'une quelconque des revendications précédentes, dans lequel le contenu d'image reçu d'au moins un de la pluralité d'autres récepteurs de télévision (110) est un contenu alternatif, autre que le contenu spécifié par la au moins une demande de contenu d'image lorsque la au moins une demande de contenu d'image n'a pas été autorisée par un système de contrôle de contenu.

7. Procédé selon l'une quelconque des revendications précédentes, comprenant en outre transcoder le contenu d'image reçu du au moins un de la pluralité d'autres récepteurs de télévision (110) en utilisant le premier récepteur de télévision (101).

8. Procédé selon l'une quelconque des revendications précédentes, dans lequel le contenu d'image reçu du au moins un de la pluralité d'autres récepteurs de télévision (110) a été transcodé par le récepteur de télévision respectif.

9. Procédé selon l'une quelconque des revendications précédentes, dans lequel ladite sortie (300) comprend un contenu de programmation reçu par un syntoniseur (103) du premier récepteur de télévision (101).

10. Système (100) destiné à générer une sortie d'un premier récepteur de télévision, comprenant :
un premier récepteur de télévision (101) adapté pour générer ladite sortie; et
une pluralité d'autres récepteurs de télévision (110), couplés par un réseau local (109) au premier récepteur de télévision d'une manière communicable; dans lequel le premier récepteur de télévision envoie au moins une demande de contenu d'image à chaque récepteur de télévision de la pluralité d'autres récepteurs de télévision, reçoit ledit contenu d'image de chacun de la pluralité d'autres récepteurs de télévision et génère ladite sortie (300) comprenant le contenu d'image reçu de chacun de la pluralité d'autres récepteurs de télévision, ladite sortie étant divisée en au moins une pluralité de parties (301, 302) et chacune de la pluralité de parties correspondant au contenu d'image reçu de chacun de la pluralité d'autres récepteurs de télévision;
dans lequel lorsque le premier récepteur de télévision reçoit une entrée utilisateur identifiant une partie sélectionnée de la pluralité de parties, un syntoniseur du premier récepteur de télévision est réglé pour recevoir le contenu de programmation correspondant à la partie sélectionnée de la pluralité de parties.

11. Système selon la revendication 10, dans lequel le contenu d'image reçu d'au moins un de la pluralité d'autres récepteurs de télévision (110) comprend un contenu de programmation que ledit un récepteur de télévision sort à un dispositif d'affichage.

12. Système selon la revendication 10, comprenant en outre au moins un dispositif de détection couplé d'une manière communicable à au moins un récepteur de télévision de la pluralité d'autres récepteurs de télévision (110), où le contenu reçu dudit récepteur de télévision de la pluralité d'autres récepteurs de télévision comprend un contenu détecté reçu par ledit dispositif de détection.

13. Système selon la revendication 10, 11 ou 12, dans lequel le dispositif de détection comprend au moins l'un d'entre un appareil photo ou un microphone.

14. Récepteur de télévision (101), comprenant : au moins une unité de traitement (104) adaptée pour générer au moins une sortie; un syntoniseur; et
au moins un composant de communication réseau (108), couplé d'une manière communicable à la au moins une unité de traitement, adapté pour envoyer au moins une demande de contenu d'image à chaque récepteur de télévision d'une pluralité d'autres récepteurs de télévision (110) et recevoir un contenu d'image de chacun de la pluralité d'autres récepteurs de télévision par un réseau local (109);
dans lequel ladite unité de traitement génère ladite sortie comprenant le contenu reçu de chacun de la pluralité d'autres récepteurs de télévision, de telle sorte que ladite sortie (300) est divisée en au moins une pluralité de parties (301, 302) et chacune de la pluralité de parties correspond au contenu d'image reçu de chacun de la pluralité d'autres récepteurs de télévision;
dans lequel, lorsque l'unité de traitement reçoit une entrée utilisateur identifiant une partie sélectionnée de la pluralité de parties, ledit syntoniseur (103) du récepteur de télévision est réglé pour recevoir un contenu de programmation correspondant à la partie sélectionnée de la pluralité de parties.

15. Récepteur de télévision selon la revendication 14, comprenant en outre : au moins un composant d'interface utilisateur adapté pour recevoir au moins une entrée pour modifier au moins un aspect de la sortie, où ladite unité de traitement (104) modifie ledit aspect de la sortie en réponse à ladite entrée.
